# EUROPEAN PATENT APPLICATION

(11) **EP 3 163 073 A1**
(43) Date of publication of application: **03.05.2017**
(21) Application number: 14895994.3
(22) Date of filing: 27.06.2014
(51) Int. Cl.: F03D 7/02

(54) **DEVICE FOR CHANGING THE ANGLE OF INCLINATION IN WIND TURBINES**

(71) Applicant: Nabrawind SL, 31002 Pamplona (ES)
(72) Inventor: SANZ Pascual, Eneko, E-31002 Pamplona (Navarra) (ES); SAVII COSTA, Hely Ricardo, E-31133 Uterga (Navarra) (ES)
(74) Representative: Igartua, Ismael
(86) International application number: PCT/ES2014/000106
(87) International publication number: WO 2015/197876

(57) **Abstract**

The invention relates to a device for changing the angle of inclination (13) in wind turbines, which device is formed by a connection part (4) having a peripheral rolling ring (10) on which three support points (11), which support a bed (6) where the power train is supported, roll, thereby permitting the orientation of the yaw angle. At least one line of pistons (14) and their corresponding cylinders (15) are provided on each of the rolling support points (11), anchored to the bed (6) via a plate (16) for each group of actuators, thereby integrating the yaw and tilt actuation system. When the cylinder (15) pushes or retracts the piston (14) and the piston (14) extends or retracts the ringshaped connection part (4) (the fixed part), and the bed (6) that supports the power train (the mobile part) displacing a certain angle α, the piston (14), which is articulated (17) in the lower end thereof, progressively inclines in proportion to the angle of inclination α. The degree of inclination reached, for a leeward wind turbine, is based on the measurements of respective anemometers (5) established in the front portion of the nacelle (3).

## Description

### Field of the invention

The present invention is encompassed in the field of wind turbines and, more specifically, the device enabling variation of the inclination angle (tilt) that the rotor axis forms with the horizontal plane.

### Background of the invention

The rotor axis tilt was not initially intended for alignment with the wind direction. Instead it was conceived to increase the space between the blades and tower to prevent collisions. This increase is very significant upwind, since the maximum blade deflection bends toward the tower. In this case, the tilt causes a certain horizontal wind misalignment, which worsens when the wind has vertical components (particularly on complex terrain). The effects are nevertheless reversed with downwind rotors. Firstly, the maximum blade deflection faces outward and the tilt is thus not as necessary. However, this angle improves alignment with vertical wind components. Consequently, the disadvantage for energy production in upwind rotors assumed because of the need for blade deflection becomes an advantage for downwind rotors and even an opportunity for additional improvement. A variable tilt that can adapt to the wind direction enables production of the maximum energy possible at all times. Therefore, having a system for actively changing the tilt provides an increase in energy production (AEP) and consequential reduction in cost of energy (COE).

In this regard, there are already inventions in the state of the art seeking this improved exploitation through an active tilt control system. Therefore, the novelty does not entail controlling this tilt, but rather the mechanical solution adopted between the frame and yaw system to secure this variation in the tilt efficiently. The present invention integrates both devices for yawing the rotor with the wind direction and varying the tilt in a single device.

The state of the art in tilt variation systems comprises a significant number of patents, though most are for upwind wind turbines and are complex control systems that take different measurements and engage the device for changing the tilt angle to improve power generation performance. In view of the foregoing, the search for background developments in this regard is limited to tilt control systems presenting some detailed solution that applies to downwind wind turbines.

Patent US2004/0076518 presents a solution where the tilt of the rotation axis changes and absorbs the loads produced by the gyroscopic precession of the rotor as it constantly adjusts to the wind direction. The tilting movement is executed through a ballast that hangs from the tower and supports the nacelle. It enables assembly rotation and nacelle tilting. It also permits the addition of actuators to the ballast for forcing the movement. It also incorporates a rotor speed control system for using the wind turbine's own weight as parameters for said control.

Patent EP1683965 describes a control system and when a certain angle is established between the horizontal plane and the wind turbine rotation axis, the eccentric elements or cams (104, 105 and 106) engage the ends of the nacelle and change the tilt angle, causing the nacelle to tilt on a yaw point. This enables the nacelle to "nod" until it is aligned with the wind direction (Q), at which point yawing stops. The nacelle yawing point is on a pedestal, serving as the yaw system while also attaining the nodding movement. The eccentric elements comprise some actuators that extend and withdraw a piston. However, the system that enables the actuators to rotate according to the yawing is a complex system of notched wheels that move the nacelle (4) on the actuator support (13). The layout of the forked articulation varies the entire wind turbine and fully conditions the entire design of the nacelle or frame, greatly complicating it because it does not permit load reactions on the parts nearest the tower (outside) but rather on the central axis. This will render said structure more complicated and expensive.

The device contemplated in the object of the invention was developed with a view to providing a solution to the problems existing in the current state of the art by integrating yaw and tilt movements into a single modular element. The main advantages will thus be simple construction, efficient engagement, versatility and final cost of the solution.

### Description of the invention

The wind turbine of the invention is seated on a ringed transition part that fully supports the drive train. This large structure connects the lattice tower to the nacelle (described in patent PCT/ES2014/000036), requires no pedestal and also contains the yaw rolling elements.

The new device proposed for changing the tilt is installed in series with the rolling elements on the original structure. It is installed in the same position as the yaw system elements described in patent PCT/ES2014/000037, and the yaw system and tilt are thus integrated in a single multi-axial engagement element. Therefore, even though loads pass through this device toward the tower, there is no variation in the path of wind turbine loads. If one wind turbine version does not include the device, the rest of the wind turbine does not vary. This constitutes a design advantage in terms of versatility to possibly tailor wind turbines to the needs of the site, with or without the active system. For example, if the wind is consistently horizontal or always in the same direction, a permanent tilt or even no tilt could be incorporated. Wind turbines containing no active tilt system will have no extra cost in this regard.

Instead of nodding with two engagements on the ends and a rotation axis in the center (EP1683965), the new proposal suggests varying the base plane of the nacelle parallel to the rotor axis through three engagement points, which represent the minimum number for unequivocally defining a plane.

The new device integrates the tilt control system and yaw system into a single element, which is the assembly contemplated as object of the invention.

Another object of the invention is the integration of this engagement into the power control system. Three-axis ultrasonic sensors or two anemometers are installed at the front end of the nacelle, one for measuring the horizontal component and the other for measuring the vertical component. Given that the wind turbine of the preferential embodiment is downwind, the measurements of these anemometers will not be distorted because of passage through the rotor blades, therefore increasing their measurement accuracy and, consequently, the precision of the yaw and tilt systems depending on them. Additionally, given the broad diameter of the nacelle, the distance between the sensors and rotor is longer than 15 m and the measurement is thus taken with a certain degree of anticipation. The resulting anticipated reaction of the yaw and tilt systems will therefore enable the reduction of extreme loads caused by occasional gusts of wind and even alleviate the fatigue load spectrum compared with upwind wind turbines. These load reductions will obviously yield cost reductions for components sized to withstand said loads.

### Brief description of the drawings

Below is a very brief description of a series of drawings useful for better understanding the invention. These drawings serve as a mere example and are expressly related yet not restricted to one embodiment of this invention.
Figure 1 depicts a full view of a downwind wind turbine.
Figure 2 is a perspective view of the rotor, drive train, ringed part and part of the tower.
Figure 3 is a cross-section view of the previous figure.
Figure 4 depicts a detail of the yaw rolling system, delimiting its contour along a thicker line. The foregoing all pertain to the state of the art.
Figures 5a and 5b are schematic representations of the device of the invention in the standby position and engaging.
Figures 6a and 6b depict the new engagement points of the device on the ringed part and part of the tower according to the prevailing wind.
Figures 7a and 7b depict another practical embodiment with dual engagement cylinders to absorb the bending of their rods.
Figure 8a depicts a plant view layout of the platforms supporting the engagement cylinders on the yaw system trains. Figure 8b shows a detail of the larger one.
Figure 9 depicts the cross-section of figure 3 with the tilt device added in two positions (a and b) at different angles with complementary engagement and contrary direction between the front actuator and rear actuators.
Figure 10 depicts the replacement of the device with a solid block to statically particularize the tilt angle required at a site with no variability of the vertical wind direction.
Figure 11 depicts one variant in which the tilt variation system is installed between the ringed part and tower, not integrated with the yaw system but rather in series with the load path of the structure through the main legs of the tower.
Figure 12 is a front view depicting the yaw and tilt system, and option 12b displays a new practical embodiment in which some pistons are replaced with guides designed to absorb horizontal or shear loads, thereby preventing the piston rods from bending and thus avoiding the need to double them as shown in Figure 7.

### Detailed description of the invention

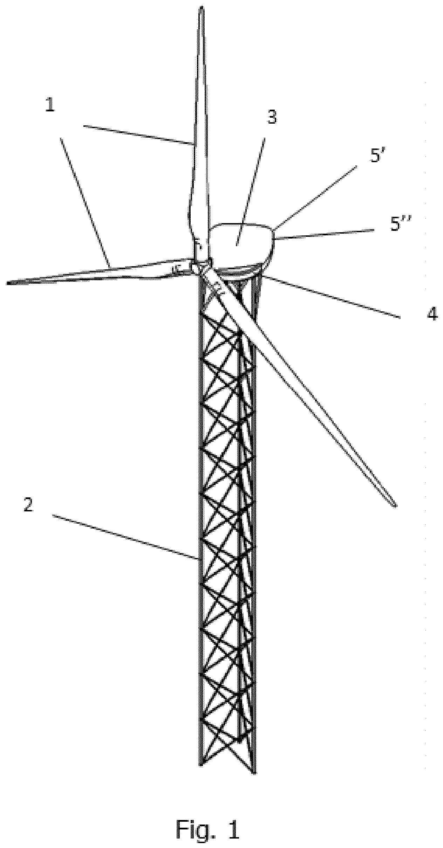

In figure 1, the device for changing the tilt angle is installed on a horizontal axis wind turbine with at least two blades (1) oriented with the wind and standing on a lattice tower (2) having at least three legs. There is a ringed connection part (4) between the nacelle (3) and tower (2). Two anemometers (5) are installed at the front end of the nacelle (3), one for measuring the horizontal component (5') and the other for measuring the vertical component (5"). These measures feed the control system, which indicates the degrees that the nacelle (3) should move with respect of the horizontal ground plane.

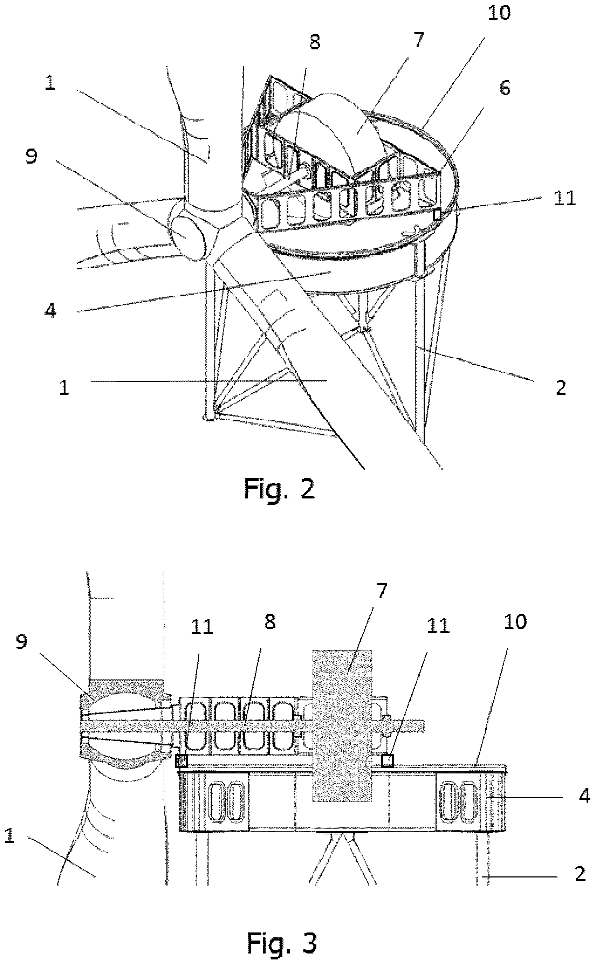

As depicted in figures 2 and 3, the lattice tower (2) supports the ringed connection part (4) upon which a triangular bench (6) is seated and houses the generator (7) and main shaft (8), and supports the rotor (9) on one end. The top part of the ringed connection part (4) has a ring or rolling track (10) that forms part of the yaw system. This yaw system comprises the aforementioned ring (10) and the three rolling supports (11), each one situated on each vertex of the triangle formed by the bench (6).

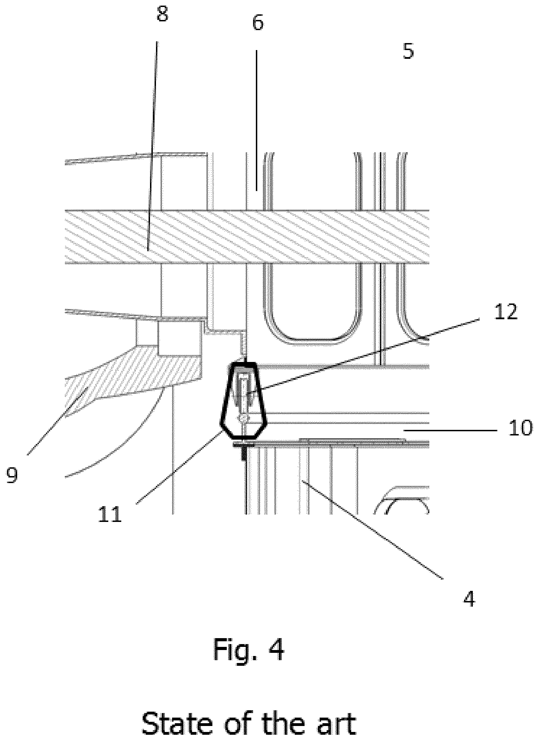

As shown in figure 4, the bench (6) is seated on the ringed connection part (4) through the rolling system comprising a rolling ring (10) and its corresponding rolling supports (11). The rolling ring (10) has a section that is shaped as an inverted T at the base and circular at the top. At the support point (11) (the casing depicted with a thicker line in the image) and more specifically therein, the rolling elements (12) are shown engaging the rolling ring (10). The foregoing is current state of the art as described in patent PCT/ES2014/000037.

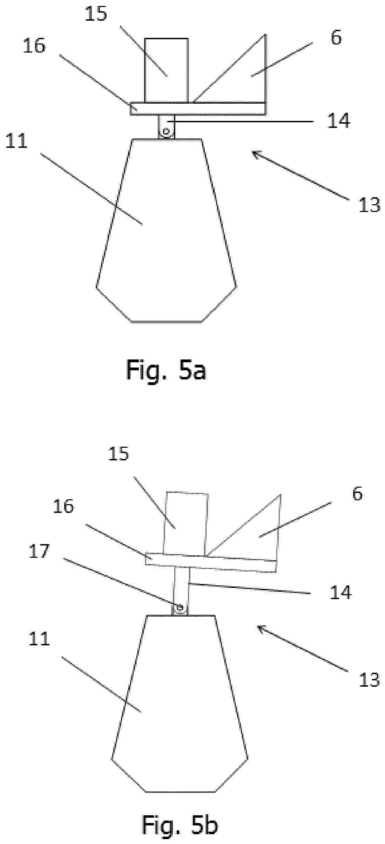

Figure 5a depicts the casing comprising the support point (11), which includes the rolling elements (not shown in the figure). This support (11) moves along the rolling ring (not shown in the figure) and its top connects to the bench (6) through a piston (14) that crosses a plate (16) joined to the plate (6) before coupling with its corresponding cylinder (15). Figure 5b depicts how, once the cylinder (15) begins operating, the piston (14) pushes via the plate (16) coupled to the bench (6) and, as it extends, moves the bench (6) supporting the drive train, which is the moving part, at a certain angle α (tilt angle). The lower end of the piston (14) is articulated (17) and progressively inclines in the same measure α as the tilt angle increases. The assembly comprising the yaw rolling system and the tilt angle variation system is marked as device (13).

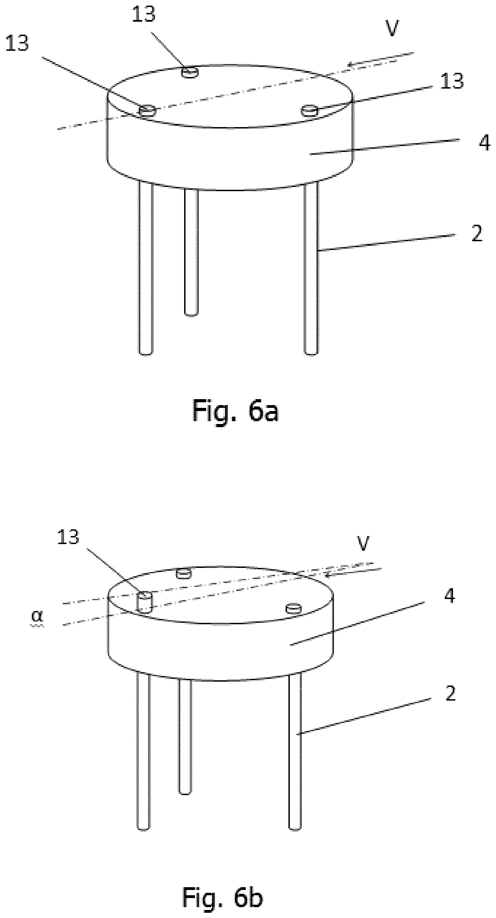

Figures 6a and 6b depict a schematic representation of the tower (2) supporting the connection part (4) on which there are notably three devices (13), each one formed by the grouping of several pistons and cylinders. Depending on the wind direction V, the rolling elements yaw the nacelle and one of the three points on the tilt system (13) always remains aligned with the wind direction V. When the wind direction changes because of the vertical wind component, the device also changes its tilt angle α. The typical starting range for the tilt angle could be ±15°. However, given that the wind direction virtually never has a negative vertical component (downward), the engagement range is more particularized between 0° and 10°. In this case, the maximum distance of the path to run per piston (14) will be less than 1 m, considering that the movement will always be distributed between the group of front cylinders (15) and the two groups of rear cylinders.

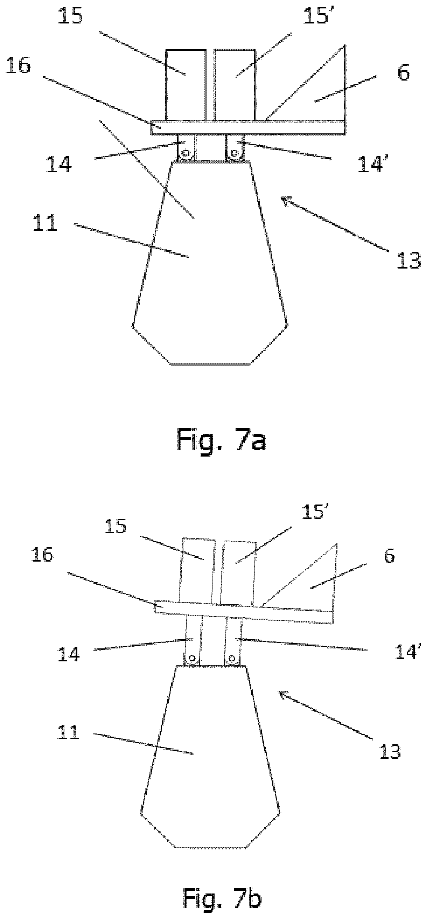

Figures 7a and 7b depict a second practical embodiment of the invention for when the engagement is executed by two lines of pistons (14 and 14') and their corresponding cylinders (15 and 15') instead of by a single line. The group of pistons cross and the cylinders rest on their corresponding plates (16). The use of two pistons absorbs the shear load to prevent the rod from bending, as would be the case when using a single piston.

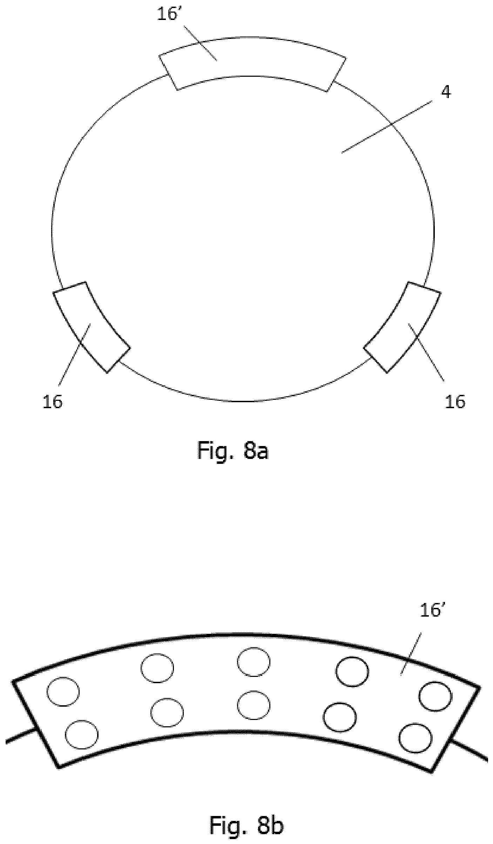

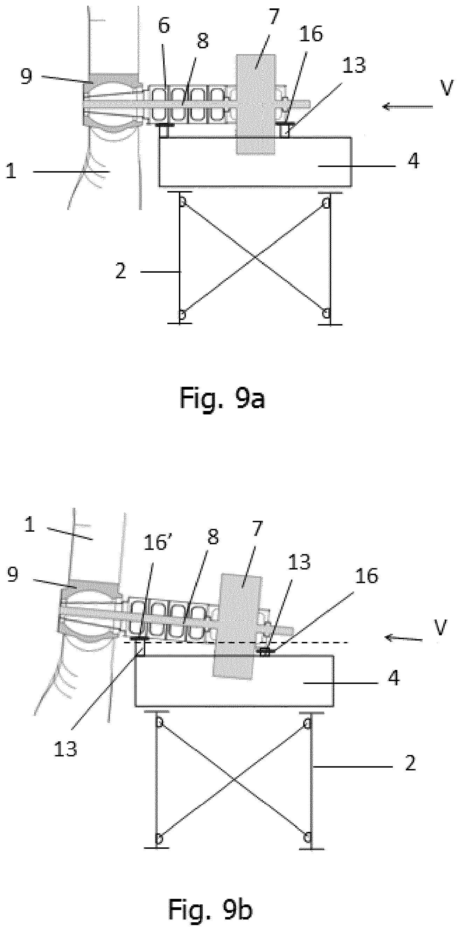

Figure 8a depicts the plant view layout of the plates (16) through which the two lines of pistons mentioned above pass when pushed by the engagement cylinders. The plate (16') nearest the rotor is larger because it sustains a greater load than the other two plates, which accompany the operation of the first one. Figure 8b depicts a detail of this plate (16') with 10 holes through which the corresponding five pairs of pistons necessary to vary the tilt angle according to this particular embodiment pass, though the number of pistons in the final implementation may vary and will depend on the loads and detailed design. Thus, through the plate (16'), the device (13') near the rotor extends its pistons, the other two devices (13) retract theirs so that the tilt angle is the sum of both movements as depicted in figures 9a and 9b.

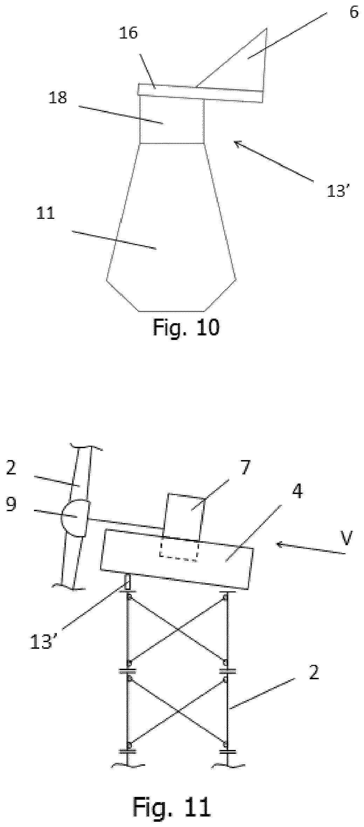

There is a second embodiment for when vertical wind components are sufficiently constant so that the tilt angle variation is always the same. In this case, the wind turbines could be equipped with a shim (18) installed on the support (11) that includes the rolling elements and plate (16) secured to the bench (6) supporting the drive train as depicted in figure 10. In said embodiment, the fixed device for adjusting the tilt angle (13') could be installed between the ringed part (4) and the tower (2) as depicted in figure 11.

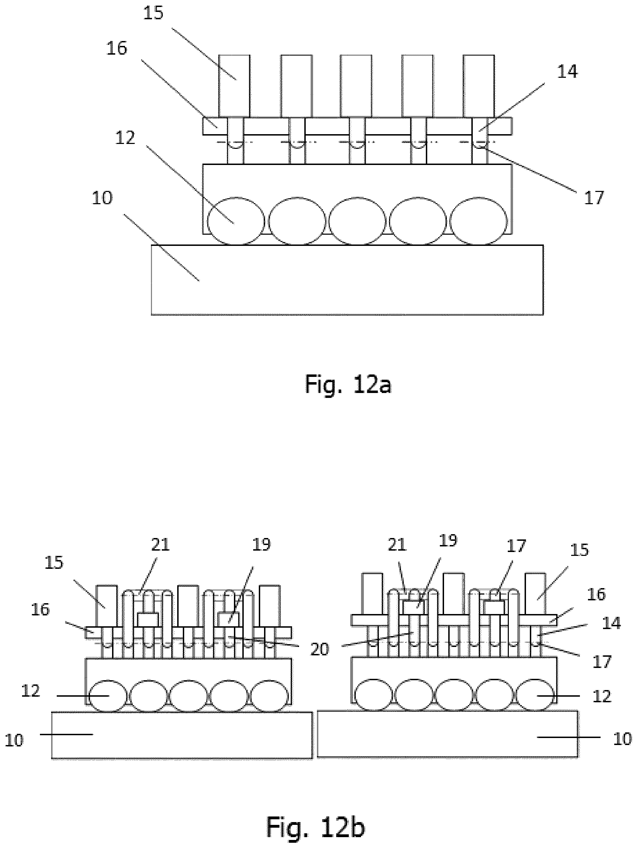

Lastly, figure 12a depicts another alternative with guides (19) to help withstand (15) shear stress without excessively increasing the number of cylinders (15). Figure 12b depicts how the movement is carried out in this new embodiment, where at least two of the cylinders (15) have been replaced with some guides (19) that support at least two rods (20). Said rods (20) are articulated (17) at the bottom and coupled to a rafter (21), which in turn fastens it through its own articulation (17) to the support structure (11) that the yaw elements contain. The rafter (21) is attached to the support structure (11). The guides (19) are attached to the plate (16). When engaging the tilt system, the new rod (20) attached to the yaw with the articulation slides along the guide (19), enabling vertical movement while absorbing horizontal movement. This is depicted in figure 12b on the left, where the pistons (14) are retracted in the cylinder (15), and in figure 12b on the right, where both pistons (14) are extended. The rods (20) have slid compared with the guide (19), which has been raised while said rods (20) remain on the same vertical plane.

## Claims

1. Device for changing the tilt angle (13) in horizontal axis wind turbines having at least two blades (1) facing downwind, a lattice tower (2) having at least three legs, and circular-shaped connection part (4) between the nacelle (3) and tower (2), characterized because the connection part (4) has a perimeter rolling ring (10) for rolling the three support points (11) that support the bench (6) that sustains the drive train through the three plates (16), which have at least one row of holes passed through by at least one piston (14), which connects each rolling support (11) underneath the bench (6) with its corresponding cylinder (15) on the bench (6) and anchored thereto through the corresponding plate (16) when the cylinder (15) pushes or retracts the piston (14) and the piston (14) extends or retracts the ringed connection part (4), which is the fixed part, moving the bench (6) supporting the drive train, which is the moving part, a certain angle α, the piston which is articulated (17) at its lower end begins tilting progressively in the same proportion to the tilt angle α that the rotor (9) moves with respect to the horizontal plane of the ground.

2. Device for changing the tilt angle in wind turbines according to the first claim, characterized because the assembly comprising the cylinder (15) and piston (14) only extends in the device (13) near the rotor (9) and retracts in the other two devices completing the triangle that supports the bench (6).

3. Device for changing the tilt angle in wind turbines according to the first claim, characterized because the tilt angle α ranges between 0° and 10°, which represents a piston (14) run length less than 1 meter in extension or retraction at each of the three engagement points.

4. Device for changing the tilt angle in wind turbines according to the first claim, characterized because the control of the degrees for tilting the nacelle (3) compared to the horizontal plane of the nacelle is based on the measurements from individual anemometers (5) installed at the beginning thereof and, given that the wind turbine is downwind, are situated more than 10 m from the rotor (9) and therefore unaffected by the shadow from the blades (2).

5. Device for changing the tilt angle in wind turbines according to the first claim, characterized because at least one of the engagement points of the cylinders (15) are doubled and arranged along two parallel rows along the entire surface of the plate (16).

6. Device for changing the tilt angle in wind turbines according to the first claim, characterized because at least one of the cylinders (15) is replaced with some guides (19) along which at least one rod (20), likewise articulated (17) on the bottom, slides attached to a rafter (21) that in turn attaches it again through an articulation (17) to the support (11) of the yaw structure, which is the fixed part.
